Europäisches Patentamt

European Patent Office

Office européen des brevets

(11) Publication number: **0 019 891 A1**

# EUROPEAN PATENT APPLICATION

(21) Application number: 80102910.9

(22) Date of filing: 24.05.80

(51) Int. Cl.³: **A 01 K 31/07**, B 65 D 85/50, B 60 P 3/04, A 01 K 45/00

(30) Priority: 30.05.79 GB 7918771

(71) Applicant: **Sun Valley Poultry Limited, Hereford HR4 9PB (GB)**

(72) Inventor: **Clark, Colin Rankin, Walnut Tree Bungalow, Shucknall Hereford (GB)**
Inventor: **Shore, Arthur Robert, 11 Mount Way, St. Weonards Hereford (GB)**
Inventor: **Corbett, Robert Anthony, Newchurch Farm, Kinnersley Hereford (GB)**

(43) Date of publication of application: 10.12.80 Bulletin 80/25

(74) Representative: **Harrison, Gordon Donald et al, Forrester & Boehmert Widenmayerstrasse 5/IV, D-8000 München 22 (DE)**

(84) Designated Contracting States: **BE DE FR IT NL**

(54) **Container for and method of handling small livestock such as poultry.**

(57) The invention concerns in the first instance a container for conveying small livestock, such as poultry, comprising a shell (8) of openwork construction, which supports a number of drawers (10) in a plurality of tiers of several drawers each, referably two tiers being arranged side by side and two tiers being arranged end to end. The container comprises locking means to lock all the drawers, either simultaneously or individually. When the drawers are in their open positions, there is ready access to the interior thereof. Each drawer comprises a part (32) which may be moved between an open position and a closed position and which, when the drawer is in its closed position and said part (32) is in its open position, permits access to the interior of the drawer which may conveniently be used in the washing of the drawers. In carrying out the method, a container is positioned at an unloading station and is moved vertically to present to an operative at the unloading station each of the superposed drawers in turn.

Title: "Improvements relating to containers and systems
of transportation"

This invention is concerned with improvements relating to containers, specificially for conveying small livestock, and systems of transportation, specifically for conveying small livestock from geographically spaced buildings in which the small livestock is housed, to a factory in which the livestock is to be processed. The invention has been devised particularly for use in relation to the handling of poultry such as chickens, turkeys and the like, but it will be appreciated that the invention may be used to advantage in the handling of other small livestock.

In the Specification of our co-pending European application No. 79101451.7 there is disclosed a poultry handling system, involving the use of a novel container. The container comprises an outer frame, a plurality of superposed drawers mounted within and supported by the frame for sliding movement relative thereto between open positions in which there is ready access to the interior of the drawers and closed positions, and locking mechanism whereby the drawers may be secured in their closed positions. The frame is of open work construction, and the locking mechanism is operative to lock all the drawers of the container simultaneously, and is particularly adapted to be operated in consequence of any lifting of the container, by a transporter, such as a fork-lift truck, and to be retained in its operative position in consequence of a setting down of the container over a formation provided, for example on a lorry or trailer, or a container upon which the said container is to be superposed. In the use of the container in the performance of the system, a plurality of the containers are conveyed by a lorry or trailer to a position adjacent to a building housing the small livestock, and each container is conveyed from the lorry or trailer by (for example) a fork lift truck into or to the close vicinity of the building in which the livestock is housed. The drawers of the container are opened inturn, and small livestock is placed in each drawer, whereupon the drawers are closed. The container is then carried back to the lorry or trailer by the fork lift truck, in consequence of which the locking mechanism is operated to lock all the drawers simultaneously, and retain them locked whilst the container is in position on the lorry or trailer. The plurality of containers are carried then to a position adjacent to or in the vicinity of a processing line at the factory in which the livestock is to be processed.

The containers are set down at an unloading station, at which the locking mechanism is allowed to adopt its inoperative position, and the drawers are automatically pushed out of the frame into a conveyor belt. Operatives stand alongside the conveyor belt, lift the poultry from the drawers, and hang them on a processing line. The drawers are then automatically fed through a washing station, at which they are washed, and from which they are fed to an assembly station, at which they are reassembled with the container frame.

One of the problems associated with the invention the subject of said co-pending application is that in certain circumstances, difficulty is encountered in separating the drawers from the frame automatically, and re-assembling the drawers with the or a similar frame. An additional difficulty is that the containers must be unloaded individually from the lorry or trailer by which they were conveyed to the factory, and conveyed to the unloading station one by one by a fork lift truck.

0019891

It is one of the objects of this present invention to provide an alternative poultry handling system, involving the use of a container of a different design, which can be operated in certain circumstances without encountering certain disadvantages which may be encountered in the use of the container and in execution of the system the subject of our foresaid co-pending application.

According to this invention there is provided a container for conveying small livestock, comprising an outer frame, a plurality of superposed drawers mounted within and supported by the frame for sliding movement relative thereto between open positions in which there is ready access to the interior of the drawers and closed positions, and locking means whereby the drawers may be secured in their closed positions, wherein each drawer comprises a part which may be moved between an open and a closed position and which, when the drawer is in its closed position and said part is in its open position, permits access to the interior of the drawer.

In this manner, the drawers need not be completely removed from the frame when the livestock is to be removed from the container, to permit subsequent washing of the drawers. When the livestock has been removed from the drawers, the drawers may be closed with said part of each of them in its open position, and water may be directed into the drawers through the opening afforded by virtue of the said part being in its open position. Thus, the container as a whole, including frame and drawers, may subsequent to unloading of the livestock be fed through a washing station in which the container is thoroughly cleansed.

Conveniently the part of the drawer which is capable of such movement is a front face or door of the drawer, and is capable of movement to its open position in an inward direction only, conveniently by pivotal movement thereof. In this manner, the door is unlikely to adopt its open position inadvertently whilst the drawer contains small livestock, and may be moved manually to its open position subsequent to completion of the unloading of the small livestock from the drawer, and prior to closing of the drawer. However, preferably such opening of the door involves an initial unlatching of the door (as may be effected by an initial lifting of the door) prior to pivotal movement thereof to its open position, in which it is retained by a catch. The container may then be fed through the washing station at which jets of water are directed under pressure in the drawers, such as in directions parallel to the direction of movement of the drawers between their open and closed positions. The container preferably comprises two tiers of superposed drawers located side by side, the drawers of the two tiers being mounted for movement from their closed to their open positions in the same direction, and also two tiers of two superposed drawers located end to end, the drawers of these two tiers being mounted for movement from their closed to their open positions in opposite directions.

Preferably the locking means comprises locking mechanism which may be operated to lock all the drawers simultaneously. Such mechanism may be operated manually, or may be operated automatically, by virtue of the container being lifted up by (for example) a forklift truck.

Thus advantageously the locking mechanism comprises two locking devices, each associated with one end of the container, and linkage mechanism adapted to cause the locking device at one end of the container to be moved to its locked position when the locking device at the other end of the container is moved to its locked position by virtue of the container being lifted up by the fork lift truck. In this manner, the container may be lifted up, to be transported from one position to another, by engagement of the container by a fork lift truck from either end, both locking devices operating to ensure that all the drawers are locked against movement from their closed positions.

However, as distinct from the container the subject of our aforementioned co-pending application, when the container is placed on a lorry or trailer, or upon a similar container already in position on the lorry or trailer, the locking mechanism adopts its unlocked position, and the locking devices of all the containers are moved to their locked positions by virtue of an operation of clamping the containers to the base of the lorry or trailer.

Alternatively, or in addition, the locking means may comprises individual locking devices, one associated with each drawer, which are operative to retain their associated drawers in their closed positions. Such locking devices may be operated automatically, by movement of their associated drawers to their closed positions, being capable of being manually rendered inoperative to allow the drawers to be opened.

Preferably whether a single locking means is used to lock all the drawers simultaneously, or whether individual locking devices are used to lock the drawers individually, when the locking means is inopertive, movement of the drawers to their open positions is limited to allow the drawers to open to an extent greater than 50% but less than 100%.

This invention also provides a method of handling small livestock comprising the use of a container for conveying the small livestock, said container comprising an outer frame, a plurality of superposed drawers mounted within and supported by the frame for sliding movement relative thereto between open positions in which there is ready access to the interior of the drawers and closed positions, and locking means whereby the drawers may be secured in their closed positions, in which method with the drawers of the container loaded with small livestock, the container is positioned at an unloading station, and is moved vertically to present to an operative at the unloading station and who is responsible for the unloading of the livestock from the drawers, each of the superposed drawers in turn.

In this manner, an operative standing alongside the container, and preferably facing a direction extending at right angles to the direction of movement of the drawers between open and closed positions, may remove the small livestock from each drawer in turn and place the livestock on a processing line.

Preferably the container is initially moved to a highermost position, and the operative unloads the livestock from the lowermost drawer, and the container is lowered in steps to present to the operative successively higher drawers.

Where the container is one of the kind comprising two tiers of drawers located side by side, the drawers of each tier moving from their closed to their open positions in the same direction, the operative may unload the livestock from a drawer of one tier whilst standing in front of the drawers of the other tier, and subsequent to the unloading of the livestock may close the drawer, occupy a position in front of the first said tier, opening and unloading therefrom one of the drawers of said other tier.

Preferably the processing line also extends in a direction at right angles to the direction of movement of the drawers between their open and closed positions. In this manner, two or more containers positioned side by side at the unloading station may be moved vertically, and their contents removed and placed on said processing line simultaneously.

In this manner, it is also possible to position at the unloading station two or more superposed containers, mechanism being provided to lift all the containers at the loading station to highermost positions, and to lower all the containers so that, initially successively higher drawers of the lowermost container or containers, and then successively higher drawers of the next superposed container or containers are presented to the operative for unloading

Preferably in carrying out said method, containers are used which comprise a part which may be moved between an open and a closed position and which, when the drawer is in its closed position and said part is in its open position, permits access to the interior of the drawer.

Thus, in carrying out said method of handling small livestock, subsequent to unloading of each drawer the operative causes said part to adopt its open position, and closes the drawer. Preferably the container is then conveyed to a washing station, at which water is directed to the interior of the drawer, to wash detritus therefrom, by passage of a jet of water through the opening afforded by virtue of the said part being in its open position.

Preferably the method forms part of an overall system of handling small livestock, in which a bank of similar containers is transported to the processing factory, and is retained as a bank during removal from the lorry or trailer and transport to the unloading station, advantageously being retained as a bank during transport through the washing station, and transport back to the lorry or trailer, or a similar lorry or trailer.

Advantageously transport of the bank of containers to the unloading station and through the washing station, is effected by the use of a vehicle having platform capable of controlled vertical movement, such as a scissor-lift truck.

There will now be given a detailed description, to be read with reference to the accompanying drawings, of a container, and a method and system of handling small livestock, all of which are preferred embodiments of this invention and which have seen selected to illustrate the invention by way of example.

In the accompanying drawings:

FIGURE 1 is a schematic perspective view showing the container which is the preferred embodiment of this invention;

FIGURE 2 is an enlarged perspective view showing the front end of a drawer of the container;

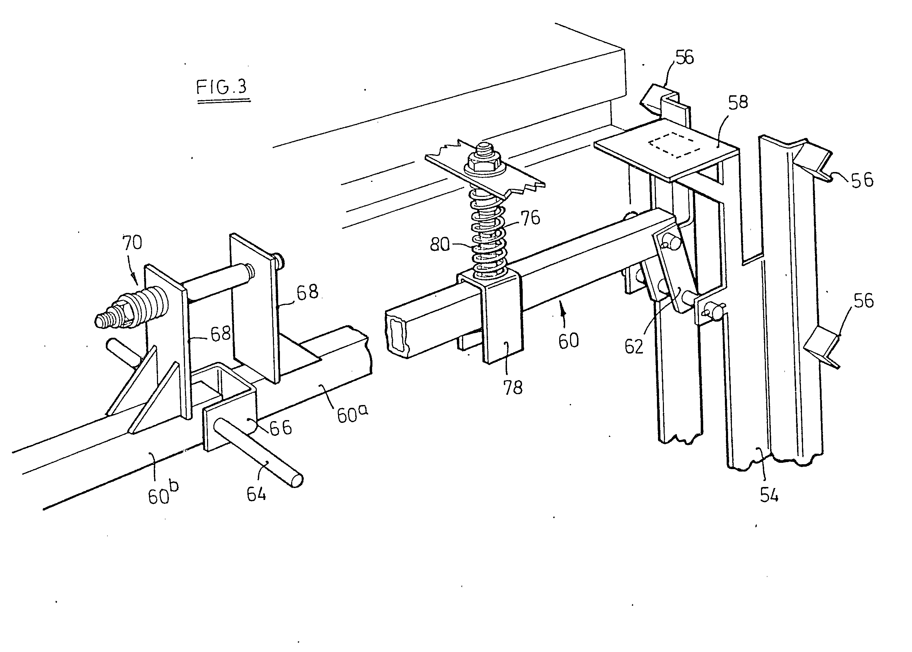

FIGURE 3 is an enlarged perspective view showing pat of a locking device of the container;

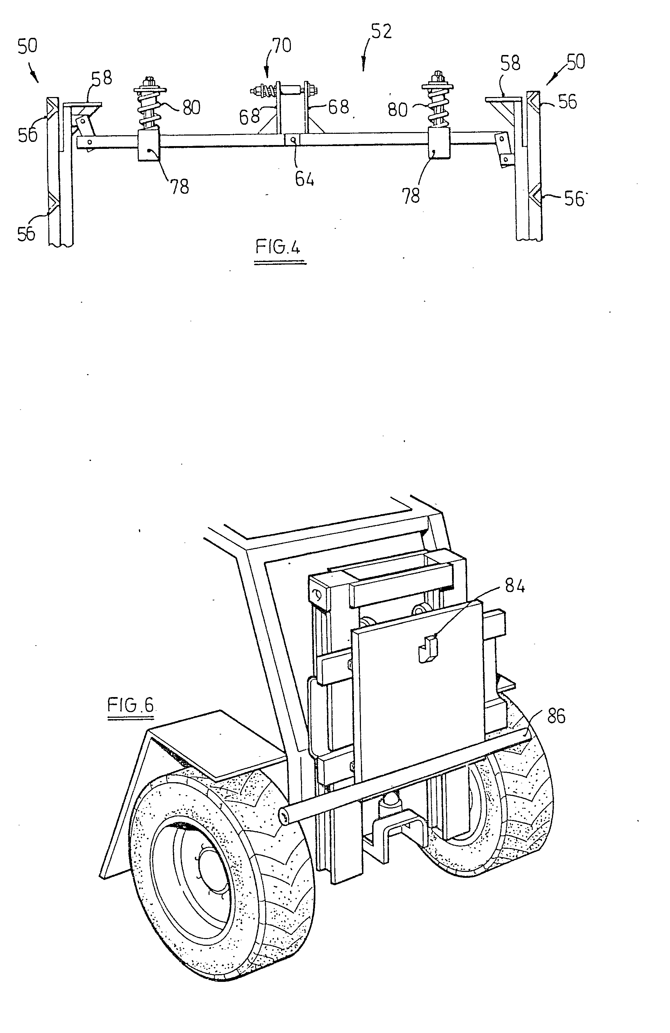

FIGURE 4 is a side elevation showing the two locking devices (one at each end) of the container, and interconnecting lonkage mechanism;

FIGURE 5 is a longitudinal sectional view of a drawer of the container, showing a door thereof in an open position;

FIGURE 6 is a front perspective view showing part of a modified fork-lift truck, suitable for use in lifting of the container which is the preferred embodiment of the invention;

FIGURE 7 is a view illustrating the unloading of a bank of containers at the processing factory.

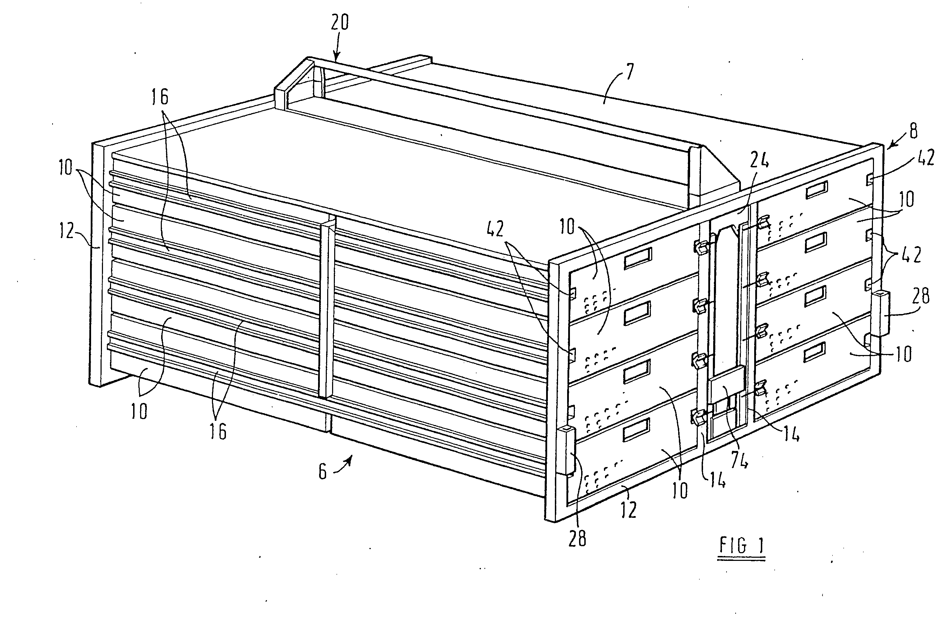

The container 6 which is the preferred embodiment of this invention (Figure 1) comprises a shell, constituted by a framework 8 of openwork construction, other than for a cover 7, the frame providing support for sixteen drawers 10 in four tiers of four drawers each, two tiers being arranged side by side and two tiers being arranged end to end.

The framework 8 comprises two rectangular end frames 12, two front vertical struts 14, and two corresponding vertical rear struts (not shown).

Connected in parallel relationship, between the vertical portions of the end frames, and between the front and rear struts, are sixteen elongate struts 16. Mounted on the cover is an upwardly projecting alignment structure 20.

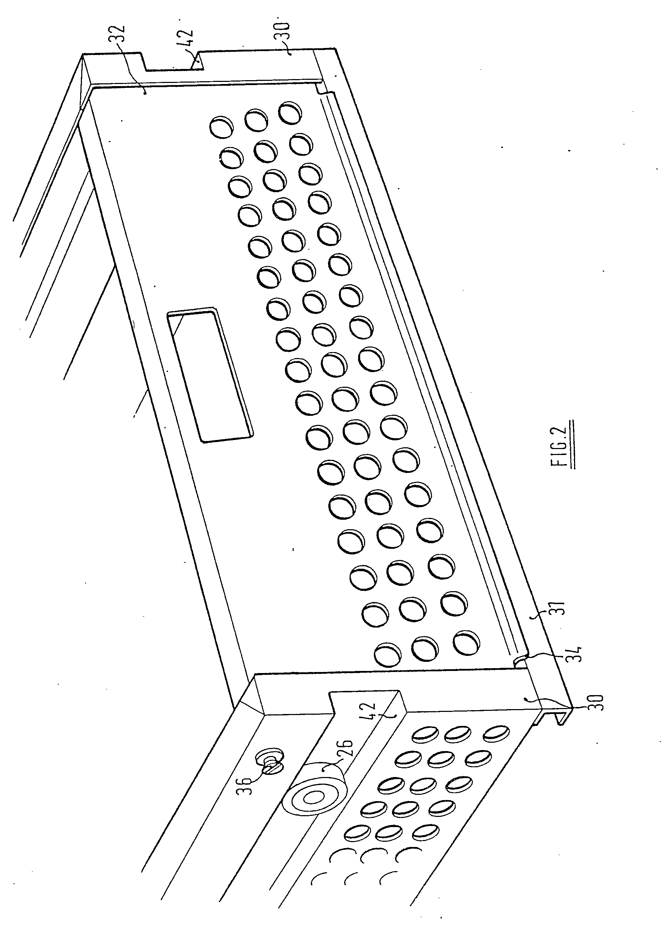

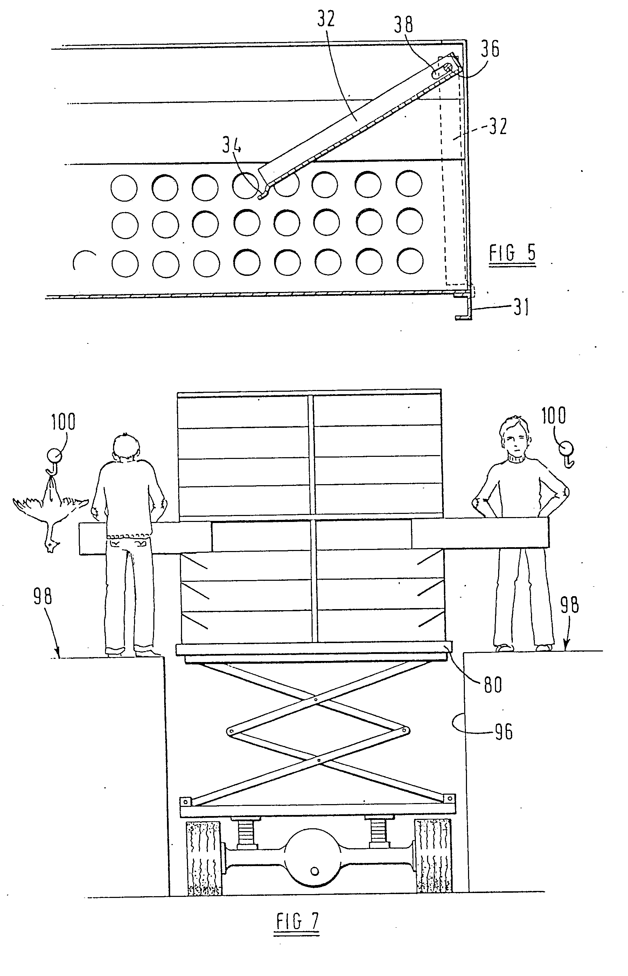

Each drawer 10 comprises side walls 30, connected together by transverse struts 31, an end wall (not shown) and a front wall, providing a door 32. The door 32 is pivotally mounted on pivot pins 36, which extend into elongate slots provided in the side edges of the door 32, allowing the door limited for freedom for vertical movement. When the door is in its closed position (shown in Figure 2 and in dotted lines in Figure 5) a lip 34 thereof extends outwardly of the transverse strut 31, restraining inward movement of the door. However, by lifting the door a short distance vertically, so that the lip 34 clears the strut 31, the door can be moved inwardly by about 60° to an open position, shown in full lines in Figure 5, in which position it may be retained by a clip (not shown).

The container comprises locking mechanism, afforded by two locking devices 50, one at each end of the container within the space afforded by the vertical struts 14, and which may be moved between an operative, locked position in which it restrains movement of the eight drawers at one end of the container, and an inoperative, unlocked position in which said eight drawers may be opened by about two thirds of their length, into engagement with a stop which prevents further opening movement of the drawers.

The side walls 30 of each drawer are provided with outwardly-facing channels, which receive rollers 26 secured to inwardly-facing surfaces of the elongate struts 16. In this manner, movement of the drawers between their open and closed positions takes place relatively smoothly.

Each locking device 50 comprises a slide plate 54, which carries eight stop members 56, and located generally centrally in the space between the two vertical struts 14, a lifting place 58. By vertical movement of the side plate 54, the stop members 56 may be moved from the position shown in Figure 1, in which they are aligned with the channels 42, on the innermost sides of the eight drawers 10. When in these positions, the drawers may be opened, with the stop members 56 being accommodated within the channels 42 of the drawers.

By vertical movement of the slide plate 54, the stop members 56 may be displaced from their positions of alignment with the channels 42, in which positions the stop members prevent opening movement of the eight drawers at the forward end of the container.

Connected to and extending between the two locking devices 50 is a connecting linkage mechanism 52, said linkage mechanism comprising an elongate bar 60 connected at its opposite ends to the lifting plates 58 of the two locking devices by a link member 62.

The elongate bar 60 is divided centrally into two parts 60a and 60b, a pivot pin 64 extending through the central end portion of the part 60b and through a bracket 66 secured to the central end portion of the part 60a. Extending upwardly from each part 60a and 60b adjacent the central end portion is a bracket 68, a spring bolt 70 urging the two brackets 68 together.

Extending downwardly towards a central portion of each of the parts 60a and 60b is a bolt 76 which carries at its inner end a saddle into engagement with an upper surface of the bar part.

The container which is the preferred embodiment of this invention is adapted to be lifted by a fork lift truck, the front end of which is shown in Figure 6. The truck comprises a lifting hook 84, adapted to be inserted into the space between two vertical struts 14 at either end of the container, into engagement with a bridge piece 24 of the framework. By lifting of the hook 84, the hook may engage behind the bridge piece 24, lifting the container and causing a cross bar 86 of the truck to engage abutment blocks 28, of the container.

However immediately prior to engagement of the bridge piece 24 by the lifting hook 84, the lifting hook engages the lifting plate 58, causing vertical upward movement of the slide plate 54 at that end of the container approached by the fork lift truck. The elongate bar 60 at this stage operates as a one piece bar, and the upward movement of a slide plate 54 at the one end of the container causes corresponding downward movement of the lifting plate at the opposite end of the container. Thus, at the one end the stop members 56 move upwardly out of alignment with the channesl 42, whilst at the opposite end the stop members 56 move downwardly out of alignment with the channels 42 of the drawers at the opposite end of the container. Thus, lifting of the container by the fork lift truck illustrated in Figure 6 is operative to cause both locking devices to effect locking of the drawers.

Thus, the sixteen drawers having been filled with small livestock, the container may be lifted from the floor of the building housing the poultry, and conveyed to a lorry or trailer waiting to transport the filled containers to the factory at which the poultry is to be processed, the drawers being retained locked against opening movement whilst the container is supported by the fork lift truck. The container may then be deposited on the lorry or trailer, as is more fully described in the specification of said co-pending application. However, as distinct from the construction the subject of our co-pending application, in the subject embodiment when the container is deposited on the lorry or trailer the elongate bar 60 is allowed to centralise, under the action of the two springs 80 and saddles 78, with the stop members 56 in alignment with the channels 42, i.e. with the locking mechanism inoperative.

However, when the lorry or trailer has been loaded with a bank of containers, in two tiers of four containers side by side, each tier of containers may be clamped onto the lorry by engagement of clamping hooks with cross plates 74 secured to the slide plates 54. Downward movement of the cross plates 74 at each end of the containers causes corrsponding downward movement of both slide plates 54 of each locking mechanism causing

0019891

the elongate bar to "break" about the pivot pin 64 against the action of the spring bolt 70. Thus, in this method of locking the drawers, the stop members on both sides of each container are displaced downwardly out of alignment with their associated channels 42.

The containers are placed on the lorry or trailer on a bed plate 90, provided with adjustable legs (not shown). On arrival at the factory, the legs of the bed plate may be lowered, adjusted to raise the bed plate 90, and the lorry or trailer may be driven away from the bank of containers, which will remain supported on the bed plate.

When it is desired to unload the containers, a scissor lift truck (Figure 7) is driven beneath the bed plate, and the scissor lift truck elevated slightly, prior to raising of the legs of the bed plate 90. The scissor lift truck then drives into an unloading bay 96, located between unloading platforms 98. The bank of containers at this stage, is orientated so that the containers extend across the unloading bay (from one unloading platform towards the other) with the superposed rows of containers extending lengthwise of the unloading bay.

The scissor lift truck is then operated to elevate the bank of containers to a highermost point, at which an operative standing on one of the unloading platforms 98 may open the lowermost drawer of the lowermost container.

Since the bank comprises eight containers in four columns of two, and each container comprises drawers which open in opposite directions, the unloading of each bank of the containers will normally be carried out by fouroperatives on each unloading platform, one being associated with the sixteen drawers on one side of each column of two containers.

With the bank in its highermost position, the operative will open the lowermost drawer of the lowermost container, standing in the position which would be occupied by opening of the other lowermost drawer of the container. The operative lifts the poultry from the said drawer, and hangs it on aprocessing line 100, which extends at right angles to the direction of movement of the drawers between their open and closed positions. This involves a turning movement of the operative through 90°. On completion of unloading of the drawers, the operative will lift the door of that drawer so that the lip 34 thereof clears the transverse strut 31 and pivots the door through 60°, to the position shown in Figure 5. The operative then closes that drawer, moves into the position vacated by the drawer, and opens the other lowermost drawer to unload it in a similar manner. Similarly, on completion of unloading, the operative will open the door 32 of that drawer.

When all operatives have cleared the lowermost drawers of the lowermost containers the scissor lift truck will operate to cause the bank of containers to descend by a distance equal to the height of one drawer, alowing the operatives to unload the second lowermost drawer of the containers.

On completion of unloading all the containers of the bank, the drawers thereof will be in their closed positins, and the doors 32 will be open (as shown in the lower drawes in Figure 7). The scissor lift truck then drives the bank of containers from the unloading bay 96 to a washing station, at which jets of water are directed towards the bank of containers from opposite sides, the water flowing into the containers through the openings afforded by the doors 32. The washing station may comprise eight paris of inwardly-directed water jets, cleansing of all the containers being completed by slow movement of the bank of containers through the washing statino, or may involve the use of a horziontal array of water jets, with relative vertical movement of the array taking place relative to the bank of containers. In either circumstances, water is directed into the drawers, generally in directions extending parallel to the direction of movement of the drawers between their open and closed positions, under high pressure, water hitting the end wall of each drawer, and effectively clearing the drawr of detritus. Flow of water through the apertures provided in the side walls of the drawers simultaneously effect washing of the framework of the container.

When so washed, the scissor lift truck may drive the bank of containers into a yard, at which the legs of the bed plate may be lowered, allowing the bank of containers to rest thereon, and removal of the scissors lift truck. Subsequently a lorry or trailer may reverse beneath the bed plate, the legs lowered, and the lorry or trailer may convey the bank of containers to one or more further farms from which poultry is to be collected.

Further discussion as to the manner of use of the container which is the preferred embodiment of this invention will particularly be appreciated by reading the foregoing in conjunction with the specification of our aforementioned co-pending application.

Whereas in the container which is the preferred embodiment of this invention, the locking means comprises a single locking mechanism which may be operated to lock all the drawers simultaneously, in certain circumstances it may be desirable to utilise individual locking devices associated with the individual drawers. Such locking devices may be in the form of catches, adapted to hold the drawers in their closed positions automatically, consequent upon the operation of moving the drawers to their closed positions. Such individual locking devices may be utilised instead of the locking mechanism hereinbefore described, or in addition to such locking mechanism.

CLAIMS:

1. A container for conveying small livestock comprising an outer frame, a plurality of superposed drawers mounted within and supported by the frame for sliding movement relative thereto between open positions in which there is ready access to the interior of the drawers and closed positions, and locking means whereby the drawers may be secured in their closed positions, wherein each drawer comprises a part which may be moved between an open and a closed position and which, when the drawer is in its closed position and said part is in its open position, permits access to the interior of the drawer.

2. A container according to Claim 1 wherein the part of the drawer which is capable of such movement is a front face or door of the drawer.

3 .A container according to Claim 2 wherein said part of the drawer is capable of pivotal movement in an inward direction only to its open position.

4. A container according to any one of the preceding claims wherein such movement of said part involves an initial unlatching of said part prior to movement thereof to its open position, in which it is retained by a catch.

5. A container according to any one of the preceding claims wherein the locking means comprises locking mechanism which may be operated to lock all the drawers simultaneously.

6. A container according to Claim 5 wherein said locking mechanism may be operated manually to lock all the drawers simultaneously.

7. A container according to Claim 5 wherein said mechanism may be operated automatically to lock all the drawers simultaneously.

8. A container according to any one of the preceding claims wherein the locking means comprises individual locking devices, one associated with each drawer, which devices are operative individually to retain their associated drawers in their closed positions.

9. A container according to any one of the preceding claims wherein, when the locking means is inoperative, movement of the drawers to their open positions is limited to allow the drawers to open to an extent greater than 50% but less than 100%.

10. A method of handling small livestock comprising the use of a container for conveying the small livestock, said container comprising an outer frame, a plurality of superposed drawers mounted within and supported by the frame for sliding movement relative thereto between open positions in which there is ready access to the interior of the drawers and closed positions, and locking means whereby the drawers may be secured in their closed positions, in which method with the drawers of the container loaded with small livestock, the container is positioned at an unloading station, and is moved vertically to present to an operative at the unloading station and who is responsible for the unloading of the livestock from the drawers, each of the superposed drawers in turn.

11. A method according to Claim 10 wherein the container is positioned at an unloading station initially in a highermost position, and the operative unloads the livestock from the lowermost drawer, and the container is lowered in steps to present to the operative successively higher drawers.

12. A method according to one of Claims 10 and 11 wherein the processing line extends in a direction at right angles to the direction of movement of the drawers between their open and closed positions.

13. A method according to any one of the preceding claims wherein containers are used which comprise a part which may be moved between an open and a closed position and which, when the drawer is in its closed position and said part is in its open position, permits access to the interior of the drawer.

14. A method according to Claim 13 wherein, subsequent to the unloading of each drawer, the operative causes said part to adopt its open position, and closes the drawer.

15. A method according to Claim 14 wherein the conveyor is subsequently conveyed to a washing station, at which water is directed to the interior of the drawer, to wash detritus therefrom by passage of a jet of water through the opening afforded by virtue of the said part being in its open position.

16. A method according to any one Claims 10 to 15 wherein a bank of similar containers is transported to the processing factory and is retained as a bank during removal from the lorry or trailer and transported to the unloading station.

17. A method according to Claim 16 wherein the bank is retained during transport through the washing station, and transport back to the lorry or trailer, or a similar lorry or trailer.

18. A method according to any one of Claims 10 to 17 wherein transport of the containers to the unloading station and through the washing station is effected by the use of a vehicle having a platform capable of controlled vertical movement, such as a scissor lift truck.

19. A container for conveying small livestock, constructed and arranged substantially as hereinbefore described with reference to the accompanying drawings.

20. A method of handling small livestock when carried out substantially has hereinbefore described with reference to the accompanying drawings.

FIG 1

FIG.2

FIG.3

FIG.4

FIG.6

0019891

FIG 5

FIG 7

## EUROPEAN SEARCH REPORT

European Patent Office

00I9891

EP 80 10 2910

### DOCUMENTS CONSIDERED TO BE RELEVANT

| Category | Citation of document with indication, where appropriate, of relevant passages | Relevant to claim |
|---|---|---|
| | US - A - 2 896 996 (ATWATER)<br><br>* Column 3, line 13 to column 4, line 2 *<br>-- | 1, 5-6, 9 |
| | DE - C - 956 817 (MOLLER)<br><br>* The whole document *<br>-- | 1, 5, 10 |
| P,D | EP - A - 0 005 755 (SUN VALLEY POULTRY LTD.)<br><br>* Claims 1-10 *<br>-- | 1, 5, 7, 10 |
| | US - A - 3 272 182 (LUND)<br><br>* Column 5, lines 33-68; figures 9-10; column 7, lines 19-44 *<br>-- | 1, 5, 7 |
| | FR - A - 1 589 543 (S.I.T.A.P.)<br><br>* Page 2, lines 1-31 *<br>-- | 2-4 |
| | US - A - 2 065 416 (ALBERT)<br><br>* The whole document *<br>-- | 2, 4 |
| | FR - A - 2 219 662 (LOVY)<br><br>* Page 2, lines 1-3 *<br>-- | 2, 4 |
| | US - A - 3 885 525 (POWELL)<br><br>* Abstract *<br>-- | 10, 15-16 |

./..

**CLASSIFICATION OF THE APPLICATION (Int. Cl. 3)**

A 01 K 31/07
B 65 D 85/50
B 60 P 3/04
A 01 K 45/00

**TECHNICAL FIELDS SEARCHED (Int.Cl. 3)**

A 01 K
B 65 D
B 60 P

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08.09.1980 | CRUCHTEN |

EPO Form 1503.1   06.78

| European Patent Office | EUROPEAN SEARCH REPORT |

## DOCUMENTS CONSIDERED TO BE RELEVANT

| Category | Citation of document with indication, where appropriate, of relevant passages | Relevant to claim |
|---|---|---|
| | US - A - 3 292 581 (VAN NEST)<br><br>* Column 5, lines 9-75; figure 10; column 2, lines 18-23 * | 17, 1-2 |
| | US - A - 3 420 211 (HARTVICKSON)<br><br>* Column 1, lines 28-38; figures 1,10 * | 18 |

CLASSIFICATION OF THE APPLICATION (Int. Cl. 3)

TECHNICAL FIELDS SEARCHED (Int. Cl. 3)

EPO Form 1503.2   06.78